# EUROPÄISCHE PATENTSCHRIFT

(11) **EP 1 981 634 B1**
(45) Veröffentlichungstag und Bekanntmachung des Hinweises auf die Patenterteilung: **12.08.2009**
(21) Anmeldenummer: 07818132.8
(22) Anmeldetag: 13.09.2007
(51) Int. Cl.: B01J 21/18, C01B 31/12, B01J 8/26

(54) **VERFAHREN ZUR HERSTELLUNG VON AKTIVKOHLE MIT HOHER KATALYTISCHER AKTIVITÄT**
PROCESS FOR PRODUCING ACTIVATED CARBON HAVING A HIGH CATALYTIC ACTIVITY
PROCEDE DE FABRICATION DE CHARBON ACTIF A HAUTE ACTIVITE CATALYTIQUE

(30) Priorität: 04.10.2006 DE 102006046880
(43) Veröffentlichungstag der Anmeldung: 22.10.2008
(73) Patentinhaber: Carbotech AC GmbH, 45139 Essen (DE)
(72) Erfinder: HENNING, Klaus-Dirk, 45276 Essen (DE); BONGARTZ, Wolfgang, 41066 Mönchengladbach 1 (DE); DAHEIM, Nicolai, 59269 Beckum (DE); SCHARF, Thomas, 45289 Essen (DE)
(74) Vertreter: Gille Hrabal Struck Neidlein Prop Roos
(86) Internationale Anmeldenummer: PCT/EP2007/007960
(87) Internationale Veröffentlichungsnummer: WO 2008/040438

(56) Entgegenhaltungen:
- EP-A- 0 729 783
- WO-A-01/05704
- WO-A-99/58240
- US-A- 3 953 345

## Beschreibung

Die Erfindung betrifft ein Verfahren zur Herstellung von Aktivkohle mit hoher katalytischer Aktivität gemäß dem Oberbegriff des Anspruchs 1.

Aus der EP 1 200 342 B1 ist es bekannt, die katalytische Aktivität von Aktivkohlen durch die Behandlung mit Stickstoff enthaltenden Verbindungen zu erhöhen. Dabei werden zwei grundlegende Verfahren offenbart. Das erste Verfahren beinhaltet die Behandlung einer Aktivkohle mit Stickstoff enthaltenden Verbindungen.

Das zweite Verfahren besteht darin, dass kohlenstoffhaltige Material vor dem Verkohlen bzw. Aktivieren mit Stickstoff enthaltenden Verbindungen in Kontakt zu bringen.

Bei diesen Verfahren ist es von Nachteil, dass nur ein relativ geringer Anteil der in Form der Stickstoff enthaltenden Verbindung zudosierten Stickstoffmenge in das Kohlenstoffgerüst eingelagert wird und so die katalytische Aktivität erhöht. Außerdem sind auf jeden Fall zusätzliche Verfahrensschritte für die Herstellung der Aktivkohle mit hoher katalytischer Aktivität erforderlich.

Der Erfindung liegt die Aufgabe zugrunde, ein einfaches und wirtschaftliches Verfahren zur Herstellung von Aktivkohle mit hoher katalytischer Aktivität zur Verfügung zu stellen, bei dem sich zusätzliche Verfahrensschritte erübrigen.

Diese Aufgabe wird dadurch gelöst, dass das kohlenstoffhaltige Material in einer mehrstufigen Wirbelschicht in an sich bekannter Weise bei Temperaturen oberhalb von 800°C mit einem Gemisch aus Wasserdampf, Stickstoff und CO₂ teilvergast wird und dass in den Feuerraum und/oder in mindestens einer Stufe der mehrstufigen Wirbelschicht eine Stickstoff enthaltende Verbindung zudosiert wird.

Weiterbildungen erfolgen gemäß den Merkmalen der Unteransprüche.

Die Erfindung beruht auf dem Grundgedanken, dass die Stickstoff enthaltende Verbindung während des herkömmlichen Produktionsprozesses für Aktivkohle in einer mehrstufigen Wirbelschicht zudosiert wird. Unter einer mehrstufigen Wirbelschicht ist eine Wirbelschicht zu verstehen, die aus mindestens zwei bis max. acht Wirbelschichtböden besteht.

Durch Versuche wurde überraschend gefunden, dass die Aktivität der so hergestellten Aktivkohle durch Zugabe einer Stickstoff enthaltenden Verbindung in den Feuerraum bzw. in die einzelnen Wirbelschichtstufen auf einfache Art und Weise hergestellt und gezielt gesteuert werden kann.

Als kohlenstoffhaltiges Material sind alle bekannten Materialien für die Herstellung von Aktivkohle geeignet, wie Kokosnussschalen, Steinkohle, Braunkohlenkoks, Torfkoks oder Polymere.

Als stickstoffhaltige Verbindung wird in erster Linie Harnstoff verwendet. Die Verwendung von Hexamethylentetramin, Polyacrylnitril oder Melamin ist ebenfalls möglich.

In einer bevorzugten Ausführungsform wird als Stickstoff enthaltende Verbindung eine wässrige Harnstofflösung in die mehrstufige Wirbelschicht dosiert. Die Kornzentration der Harnstofflösung beträgt 45 %. Sie wird in einer Menge von 2 bis 10 kg Harnstoff pro 100 kg kohlenstoffhaltigen Materials eingesetzt. Als optimal hat sich eine Harnstoffmenge von 5 bis 6 kg pro 100 kg kohlenstoffhaltiges Material erwiesen.

Die katalytische Aktivität der hergestellten Aktivkohlen wird durch Messung des NO-Umsatzes bestimmt. Es ist bekannt, dass Aktivkohlen, die eine hohe katalytische Aktivität im Hinblick auf den NO-Umsatz aufweisen, ebenfalls eine erhöhte katalytische Aktivität bei der SO₂-Oxidation, der Chloraminentfernung, der Peroxidzerstörung, der H₂S-Oxidation und bei zahlreichen anderen chemischen Reaktionen besitzen.

### Bestimmung des NO-Umsatzes

Der NO-Umsatz wird bei einer Temperatur von 120°C mit einem Modellrauchgas (400 ppm NO, 400 ppm NH₃, 22 Vol.-% O₂ und 17 Vol.-% H₂O, Rest N₂) bestimmt.

In einem Reaktor werden 1,06 1 der getrockneten Aktivkohle eingefüllt und mit dem Modellrauchgas bei einer Reaktionstemperatur von 120°C durchströmt. Die Kontaktzeit beträgt 10 Sekunden. Es wird die NO-Durchbruchskonzentration während der Messung registriert und aus der NO-Konzentration im Reingas nach 20 Stunden der Umsatz, bezogen auf die NO-Eingangskonzentration berechnet.

Die Erfindung wird nachfolgend anhand von Ausführungsbeispielen näher beschrieben.

### Beispiel 1 (Vergleichsbeispiel):

Die Herstellung der Aktivkohle erfolg in einem achtstufigen Wirbelschichtreaktor. Die Feuerraumtemperatur beträgt 800 bis 940°C. Das Wirbelgas wird durch die Verbrennung von Erdgas erzeugt. Zusätzlich werden 300 kg/Stunde Dampf zugesetzt.

In den achtstufigen Wirbelschichtreaktor werden 600 kg/Stunde an kohlenstoffhaltigem Material eindosiert. Der Austrag an Endprodukt beträgt 400 kg/Stunde. Es wird keine Harnstofflösung zudosiert. Die Aktivität der hergestellten Aktivkohle wird durch Messung des NO-Umsatzes bestimmt. Die hergestellte Aktivkohle besitzt einen Stickstoffgehalt von 0,4 Gewichtsprozent. Die katalytische Aktivität gemäß dem oben beschriebenen Test beträgt 45 % NO-Umsatz.

### Beispiel 2:

In den achtstufigen Wirbelschichtreaktor wird in den Feuerraum pro Stunde 50 1 einer 45%igen Harnstofflösung zudosiert. Die übrigen Bedingungen der Aktivkohleherstellung werden nicht verändert. Das Verhältnis Harnstoff zu kohlenstoffhaltigem Material beträgt 4,2 kg Harnstoff pro 100 kg kohlenstoffhaltigem Material.

Der Stickstoffgehalt der so erzeugten Aktivkohle beträgt 1,0 Gew.-%. Im NO-Test wurde ein NO-Umsatz von 87 % gemessen.

### Beispiel 3:

In den achtstufigen Wirbelschichtreaktor wird zusätzlich zu der Eindosierung von 50 l 45%iger Harnstofflösung in den Feuerraum, 10 l Harnstofflösung in den dritten Wirbelschichtboden eindosiert. Der Stickstoffgehalt der so hergestellten Aktivkohle beträgt 1,26 Gew.-%, Es wurde ein NO-Umsatz von 89 % gemessen. Das Verhältnis beträgt 5,0 kg Harnstoff pro 100 kg kohlenstoffhaltigem Material.

### Beispiel 4:

In den achtstufigen Wirbelschichtreaktor wird zusätzlich zu der Dosierung von 50 l/Stunde Harnstofflösung in den Feuerraum noch 30 l/Stunde Harnstofflösung in den dritten Wirbelschichtboden dosiert.

Der Stickstoffgehalt der so hergestellten Aktivkohle beträgt 1,41 Gew.-%. Es wird ein Umsatz in der Testapparatur von 91 % NO gemessen. Das Verhältnis beträgt 5,9 kg Harnstoff pro 100 kg kohlenstoffhaltigem Material.

### Beispiel 5.:

In den achtstufigen Wirbelschichtreaktor wird zusätzlich zu der Dosierung von 60 l pro Stunde Harnstoff-Lösung in den Feuerraum noch 20 l Harnstoff-Lösung in den zweiten Wirbelschichtboden und weitere 20 l Harnstoff in den dritten Wirbelschichtboden dosiert. Der Stickstoffgehalt der so hergestellten Aktivkohle beträgt 1,5 Gew.-%. Es wird ein Umsatz von 92 % NO gemessen. Das Verhältnis Harnstoff zu kohlenstoffhaltigem Material beträgt 8,3 kg Harnstoff zu 100 kg kohlenstoffhaltigem Material.

Die Beispiele belegen, dass das Verfahren zur Herstellung von Aktivkohle durch Zugabe einer Stickstoff enthaltenden Verbindung in den Feuerraum bzw. in die einzelnen Wirbelschichtstufen der mehrstufigen Wirbelschicht auf einfache Art und Weise für die Herstellung einer Aktivkohle mit hoher katalytischer Aktivität im Hinblick auf die NO-Umsetzung modifiziert werden kann.

In den Beispielen wurde Harnstoff als stickstoffhaltige Verbindung ausgewählt. Die Harnstoffkonzentration wurde zwischen 4,2 kg pro 100 kg kohlenstoffhaltigem Material und 8,3 kg pro 100 kg kohlenstoffhaltigem Material variiert. Die Versuchsergebnisse verdeutlichen, dass eine Harnstoffmenge von 5 - 6 kg pro 100 kg harnstoffhaltigem Material aus technischer und wirtschaftlicher Sicht die optimale Menge darstellt. Eine weitere Erhöhung von 5,9 auf 8,3 kg pro 100 kg führt nur zu einer geringfügigen Verbesserung der katalytischen Aktivität.

## Patentansprüche

1. Verfahren zur Herstellung von Aktivkohle mit hoher katalytischer Aktivität, bei dem ein kohlenstoffhaltiges Material mit Stickstoff enthaltenden Verbindungen in Kontakt gebracht wird. **dadurch gekennzeichnet, dass** das kohlenstoffhaltige Material in einer mehrstufigen Wirbelschicht in an sich bekannter Weise bei Temperaturen oberhalb von 800°C mit einem Gemisch aus Wasserdampf, Stickstoff und CO₂ teilvergast wird und dass in den Feuerraum und/oder in mindestens einer Stufe der mehrstufigen Wirbelschicht eine Stickstoff enthaltende Verbindung zudosiert wird.

2. Verfahren nach Anspruch 1, **dadurch gekennzeichnet, dass** das kohlenstofflialtige Material aus Kokosnussschalen, Steinkohle, Braunkohlenkoks, Torfkoks oder Polymeren besteht.

3. Verfahren nach Anspruch 1 und 2, **dadurch gekennzeichnet, dass** die Stickstoff enthaltende Verbindung in Form einer wässrigen Harnstofflösung zugegeben wird.

4. Verfahren nach Anspruch 3, **dadurch gekennzeichnet, dass** der Harnstoff in einer Menge von 2 bis 10 kg Harnstoff pro 100 kg kohlenstoffhaltigem Material, bevorzugt 5 bis 6 kg Harnstoff pro 100 kg kohlenstoffhaltigem Material zugegeben wird.

## Claims

1. A process for the production of activated carbon with high catalytic activity, in which a carbonaceous material is brought into contact with a nitrogen compound, **characterized in that** the carbonaceous material is partially gasified in a multistage fluidised bed in a manner known per se at temperatures above 800°C with a mixture of steam, nitrogen and CO₂ and that in the furnace and/or in at least one stage of the multistage fluidised bed a nitrogen compound is fed.

2. The process according to claim 1, **characterized in that** the carbonaceous material is selected from the group consisting of coconut shells, coat, lignite coke, peat coke and polymers.

3. The process according to claims 1 and 2, **characterized in that** the nitrogen compound is added in the form of an aqueous urea solution.

4. The process according to claim 3, **characterized in that** the urea is fed in an amount of 2 to 10 kg urea based on 100 kg carbonaceous material, preferably 5 to 6 kg urea based on 100 kg carbonaceous material.

## Revendications

1. Procédé de fabrication de charbon actif à haute activité catalytique, dans lequel un matériau contenant du carbone est mis en contact avec des composés contenant de l'azote, **caractérisé en ce que** le matériau contenant du carbone est gazéifié partiellement avec un mélange de vapeur d'eau, d'azote et de CO₂ à des températures supérieures à 800 °C d'une manière connue dans un lit fluidisé polyétagé, et **en ce qu'**un composé contenant de l'azote est ajouté dans le foyer et/ou au moins dans un étage du lit fluidisé polyétagé.

2. Procédé selon la revendication 1, **caractérisé en ce que** le matériau contenant du carbone est composé de coquille de noix de coco, de charbon, de coke de lignite, de charbon de tourbe ou de polymères.

3. Procédé selon la revendication les revendications 1 et 2, **caractérisé en ce que** le composé contenant de l'azote est ajouté sous forme d'une solution aqueuse d'urée.

4. Procédé selon la revendication 3, **caractérisé en ce que** l'urée est ajoutée en une quantité allant de 2 à 10 kg d'urée pour 100 kg de matériau contenant du carbone, de préférence de 5 à 6 kg d'urée pour 100 kg de matériau contenant du carbone.
